# EUROPÄISCHE PATENTSCHRIFT

(11) **EP 2 847 553 B1**
(45) Veröffentlichungstag und Bekanntmachung des Hinweises auf die Patenterteilung: **19.02.2020**
(21) Anmeldenummer: 13718338.0
(22) Anmeldetag: 25.04.2013
(51) Int. Cl.: G01F 23/284

(54) **VORRICHTUNG ZUR BESTIMMUNG UND/ODER ÜBERWACHUNG DES FÜLLSTANDES UND DER DIELEKTRIZITÄTSZAHL EINES MEDIUM**
APPARATUS FOR DETERMINING AND/OR MONITORING THE FILLING LEVEL AND THE DIELECTRIC CONSTANT OF A MEDIUM
DISPOSITIF PERMETTANT DE DÉTERMINER ET/OU DE SURVEILLER LE NIVEAU DE REMPLISSAGE ET LA CONSTANTE DIÉLECTRIQUE D'UN MILIEU

(30) Priorität: 09.05.2012 DE 102012104075
(43) Veröffentlichungstag der Anmeldung: 18.03.2015
(73) Patentinhaber: Endress+Hauser SE+Co. KG, 79689 Maulburg (DE)
(72) Erfinder: BLÖDT, Thomas, 79689 Maulburg (DE)
(74) Vertreter: Andres, Angelika Maria
(86) Internationale Anmeldenummer: PCT/EP2013/058574
(87) Internationale Veröffentlichungsnummer: WO 2013/167384

(56) Entgegenhaltungen:
- DE-A1- 3 044 353
- DE-A1- 19 934 041
- DE-A1-102005 054 233

## Beschreibung

Die vorliegende Erfindung betrifft eine Vorrichtung zur Bestimmung und/oder Überwachung mindestens einer Prozessgröße eines Mediums in einem Behälter oder einer Rohrleitung. Das Medium liegt als feinkörniges oder pulverförmiges Schüttgut oder als Fluid, insbesondere in Form eines Gases oder einer Flüssigkeit, vor. Bei der Prozessgröße handelt es sich um den Füllstand und um die Dielektrizitätszahl eines Mediums. Der Füllstand kann ein kontinuierlicher Füllstand eines Mediums, ein vorbestimmter Grenzstand eines Mediums, oder der Grenzstand einer Trennschicht zwischen zwei Medien sein.
Zur Füllstandsmessung existiert eine Vielzahl an unterschiedlichen Messprinzipien. Vibronische Grenzstandschalter verwenden eine mechanisch schwingfähige Einheit, beispielsweise in Form eines Stabes oder einer Gabel, welche auf einer zu überwachenden Füllstandshöhe in einem Behälter angebracht und zu resonanten mechanischen Schwingungen angeregt wird. Die Frequenz der Schwingungen hängt davon ab, ob die schwingfähige Einheit in Luft schwingt oder von einem flüssigen Medium bedeckt ist. An einer Frequenzänderung ist daher das Erreichen des Grenzstands erkennbar. Zur Detektion von Schüttgütern erfolgt in der Regel eine Überwachung der Schwingungsamplitude.

Eine weitere Art von Füllstandsmessgeräten beruht auf dem kapazitiven Prinzip. Hierbei wird eine Sondenelektrode mit einem elektrischen Wechselspannungssignal beaufschlagt und die Kapazität zwischen der Sondenelektrode und der Behälterwand oder einer zweiten Elektrode bestimmt. Zur Grenzstandmessung ist auch eine koaxiale Anordnung von Sonden- und Masseelektrode zum Einbringen in eine Wandung des Behälters bekannt.
Insbesondere zur kontinuierlichen Füllstandsmessung in Behältern sind weiterhin so genannte TDR-Sonden bekannt. Derartige Sensoren beruhen auf der Messung der Laufzeit elektromagnetischer Signale, welche sich entlang eines in das Medium hineinreichenden Wellenleiters ausbreiten und an der Grenzfläche zu dem Medium reflektiert werden. Solche Sensoren sind gegenüber hochfrequenten Störsignalen stark anfällig. Aus der Offenlegungsschrift DE 20016962 U1 ist ein Grenzstandschalter bekannt, welcher auf dem TDR-Prinzip beruht.

Aus der DE 199 34 041 A1 ist eine Füllstand-Sensorvorrichtung zum Erfassen des Füllstands eines Mediums in einem Behälter mit einem Mikrowellenresonator bekannt.

Die Aufgabe der Erfindung besteht darin, eine gegenüber der Einkopplung von Störsignalen robuste Vorrichtung bereit zu stellen, mit welcher zumindest ein Grenzfüllstand eines Mediums auf gegenüber dem Stand der Technik alternative Weise bestimmbar ist.

Die Aufgabe wird gelöst durch eine Vorrichtung gemäß Anspruch 1.

Unter einem hochfrequenten Signal ist ein Signal mit einer Frequenz im Bereich von einigen 10 MHz bis einigen zehn GHz oder höher zu verstehen. Bevorzugt handelt es sich um ein Mikrowellensignal. Vorzugsweise liegt die Frequenz des Sendesignals im S-, C-, X-, oder K-Band, d.h. zwischen 2,4 und 26 GHz. Es sind jedoch auch geringere Frequenzen, beispielsweise 40 oder 800 MHz, oder höhere Frequenzen möglich. Die Frequenz hängt hierbei von der Ausgestaltung und Dimensionierung des Resonators ab.
Der Resonator ist beispielsweise Teil eines Reflex-Oszillators. Neben dem Resonator weist der Oszillator ein aktives Element, beispielsweise in Form eines Verstärkers, zur Erzeugung und Einkopplung einer Schwingung in den Resonator und ein auskoppelndes Element zur Auskopplung eines Ausgangssignals auf. Das Ausgangssignal des Resonators besitzt die gleiche Frequenz wie das Eingangssignal und ist einer Elektronikeinheit zur Auswertung zugeleitet. Die Frequenz des Ausgangssignals ist von dem Medium abhängig, mit welchem der Resonator in Kontakt steht. Die Ausgestaltung der Kontaktfläche hängt hierbei von der Ausgestaltung des Resonators ab. Ändert sich das Medium, welches mit dem Resonator in Kontakt steht, ändert sich die Frequenz der sich in dem Resonator ausbreitenden Welle. Die Frequenzänderung hängt hierbei von der Dielektrizitätszahl des Mediums ab. Neben dem Füllstand eines Mediums ist an Hand der Frequenz somit auch die Dielektrizitätszahl eines Mediums bestimmbar.

Die erfindungsgemäße Vorrichtung unterscheidet sich von aus dem Stand der Technik bekannten Vorrichtungen zur Füllstandsmessung mittels Hochfrequenztechnik insbesondere dadurch, dass das Medium direkt die Signalerzeugung beeinflusst. Der Resonator selbst bildet den Sensor. Im Gegensatz zu kapazitiven Sonden findet nur eine sehr geringe Signalausbreitung im Prozess, d.h. im Inneren des Behälters oder der Rohrleitung, statt.
In einer ersten Ausgestaltung ist der Resonator als Hohlleiter oder als Koaxialsonde mit einem Innenleiter und einem den Innenleiter koaxial umgebenden Außenleiter ausgestaltet. Bei dem Hohlleiter handelt es sich beispielsweise um einen_Rundhohlleiter oder um einen Rechteckhohlleiter. Der Hohlleiter bzw. die Koaxialsonde kann hierbei mit Luft oder mit einem Dielektrikum in Form eines Feststoffes gefüllt sein, wobei das Dielektrikum vorzugsweise über eine hohe Dielektrizitätszahl in der Größenordnung von 3 bis 8, insbesondere 4, verfügt. Es kann sich auch um ein Miniaturschwallrohr handeln, in welches das Medium eindringen kann. Ein als Hohlleiter oder Koaxialsonde ausgestalteter Resonator weist eine Kontaktfläche zu dem Inneren des Behälters oder der Rohrleitung auf, welche senkrecht zur Ausbreitungsrichtung der Welle in dem Resonator ausgerichtet ist. An dieser Kontaktfläche wird die Welle reflektiert.

In einer alternativen Ausgestaltung ist der Resonator als Mikrostreifenleitung oder als Patchantenne ausgestaltet. Die Mikrostreifenleitung ist beispielsweise offen oder mit einem Kurzschluss versehen, um eine Reflexion zu verursachen. Die Mikrostreifenleitung ist derart angeordnet, dass sich die Felder der sich in der Mikrostreifenleitung ausbreitenden Welle teilweise in das Innere des Behälters oder der Rohrleitung erstrecken.

In einer Ausgestaltung steht der Resonator zumindest abschnittsweise über eine elektrisch isolierende Prozesstrennschicht mit dem Inneren des Behälters oder der Rohrleitung in Kontakt. Die Prozesstrennschicht ist beispielsweise als Membran aus PTFE ausgestaltet. Für den Fall, dass der Resonator als ein mit einem Dielektrikum gefüllter Hohlleiter oder eine mit einem Dielektrikum gefüllte Koaxialsonde ausgestaltet ist, besteht die Prozesstrennschicht vorzugsweise aus einem Material, dessen Dielektrizitätskonstante höchstens der Dielektrizitätskonstanten des Dielektrikums des Resonators entspricht.

Gemäß einer Ausgestaltung der Erfindung weist die Elektronikeinheit einen Mischer zur Umsetzung des Ausgangssignals in ein niederfrequentes Signal auf. Der Mischer erzeugt aus dem hochfrequenten Ausgangssignal und einem Referenzsignal mit konstanter Frequenz ein Signal mit einer niedrigeren Frequenz, welches beispielsweise der Differenz der beiden Signale entspricht. Der Erzeugung des Referenzsignals dient beispielsweise ein spannungsgesteuerter Oszillator oder ein Oszillator, welcher analog zu dem den Sensor aufweisenden Oszillator aufgebaut ist. Das niederfrequente Signal ist einer analogen oder digitalen Auswerteeinheit zur Frequenzbestimmung zuführbar.

Eine Weiterbildung sieht vor, dass benachbart zu dem Resonator ein zweiter Resonator ohne Mediumskontakt zur Erzeugung eines Referenzsignals angeordnet ist, und dass der Mischer aus dem Ausgangssignal und dem Referenzsignal ein temperaturkompensiertes Signal erzeugt. Der zweite Resonator ist benachbart zu dem ersten als Sensor dienenden Resonator angeordnet, sodass beide Resonatoren der gleichen Umgebungstemperatur ausgesetzt sind und das gleich Temperaturverhalten aufzeigen. Durch Mischung des Ausgangssignals des Oszillators mit dem Signal des zweiten Resonators wird ein Signal erzeugt, in welchem temperaturbedingte Frequenzänderungen kompensiert sind.

In einer anderen Ausgestaltung weist die Elektronikeinheit ein Filter auf, welchem das Ausgangssignal zugeführt ist, und welches derart dimensioniert ist, dass die Amplitude des Ausgangssignals des Filters eine stetige Abhängigkeit von der Frequenz des Ausgangssignals des Oszillators aufweist. Durch die eindeutige Frequenzabhängigkeit der Amplitude ist an Hand der Amplitude die Frequenz des Ausgangssignals bestimmbar.

In einer Ausgestaltung ist die Elektronikeinheit dazu ausgestaltet, eine Änderung der Frequenz des Ausgangssignals zu detektieren und an Hand der Änderung eine Änderung eines Grenzstands des Mediums zu detektieren. Der Wert der Frequenz ist in dieser Ausgestaltung nicht zwingend zu bestimmen. Die Elektronikeinheit detektiert lediglich eine Änderung der Frequenz und ist entsprechend einfach ausgestaltbar. Durch eine derartige Vorrichtung ist ein kostengünstiger Grenzstandschalter realisiert.

Gemäß einer vorteilhaften Weiterbildung der Erfindung ist in der Elektronikeinheit mindestens ein Grenzwert für die Frequenz des Ausgangssignals hinterlegt, und die Elektronikeinheit ist dazu ausgestaltet, die Frequenz des Ausgangssignals mit dem Grenzwert zu vergleichen und ein Alarmsignal zu erzeugen, wenn die Frequenz den Grenzwert erreicht. Mit der Vorrichtung ist ein Grenzstand eines Mediums überwachbar und weiterhin zwischen verschiedenen Medien unterscheidbar, sodass auch die Grenzschicht zwischen zwei Medien bestimmbar ist. Ist bekannt, um welche Medien es sich handelt, ist für jedes Medium ein Grenzwert für die Frequenz hinterlegbar. Hierdurch ist ein Alarmsignal erzeugbar, wenn das zu detektierende Medium den Resonator berührt.

Erfindungsgemäß ist die Elektronikeinheit dazu ausgestaltet, die Frequenz des Ausgangssignals zu bestimmen und einer Dielektrizitätszahl des Mediums zuzuordnen. Beispielsweise sind in einer Speichereinheit, welche auch Teil einer digitalen Verarbeitungseinheit, beispielsweise einem Mikrocontroller, sein kann, entsprechende Abhängigkeiten zwischen Frequenz und Dielektrizitätszahl hinterlegt.
Die Erfindung wird anhand der nachfolgenden Figuren näher erläutert. Es zeigen:
- Fig. 1: eine in einer Behälterwandung montierte Vorrichtung mit einer Mikrostreifenleitung als Resonator in einer schematischen Darstellung;
- Fig. 2: eine schematische Darstellung einer in eine Rohrleitung montierten Vorrichtung mit einer Koaxialsonde als Resonator;
- Fig. 3a: ein Blockschaltbild einer ersten Ausgestaltung der Elektronikeinheit;
- Fig. 3b: ein Blockschaltbild einer zweiten Ausgestaltung der Elektronikeinheit.

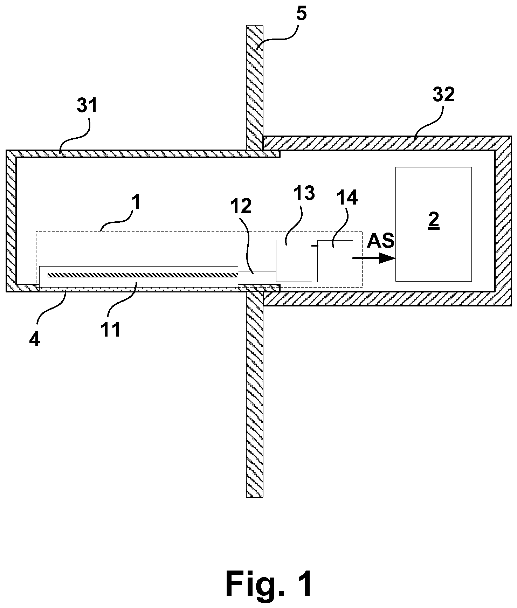

In Fig. 1 ist schematisch eine vorteilhafte Ausgestaltung einer erfindungsgemäßen Vorrichtung dargestellt, welche in einen Behälter 5 eingebracht ist. Der Behälter 5 ist in der Darstellung durch einen Teil einer Wandung angedeutet. In dem Inneren des Behälters 5 befindet sich als Sensor der Resonator 11 eines Oszillators 1. Der Resonator 11 ist zum mechanischen Schutz in ein Sensorgehäuse 31 eingebracht, welches in einer Öffnung in der Wandung des Behälters 5 montiert ist, beispielsweise über eine Gewindeeinschraubung oder einen Flansch. Eine Ausgestaltung ohne Sensorgehäuse 31 ist jedoch ebenfalls möglich.

Über eine für die Übertragung von hochfrequenten Signalen geeignete Steckverbindung 12 ist der Resonator 11 mit den übrigen Komponenten des Oszillators 1 verbunden, welche außerhalb des Behälters 5 in einem Feldgehäuse 32 angeordnet sind. Bei diesen Komponenten handelt es sich um ein aktives Element 13 zur Erzeugung und Aufrechterhaltung einer Schwingung in dem Resonator 11 und um ein auskoppelndes Element 14 zur Auskopplung eines Anteils der Schwingungen aus dem Resonator 11 über das aktive Element 13. Der ausgekoppelte Anteil der Schwingungen bildet das Ausgangssignal AS des Oszillators 1. Bei der Steckverbindung 12 kann es sich um eine einfach Steckverbindung zwischen zwei gleichartigen Wellenleitern oder um ein Verbindungselement zwischen zwei verschiedenartig ausgestalteten Wellenleitern handeln. Eine Verbindung zwischen verschiedenen Arten von Wellenleitern ist beispielsweise erforderlich, wenn das aktive Element 13 auf einer Mikrostreifenleitung oder einer Leiterkarte angeordnet ist, der Resonator 11 jedoch als Hohlleiter oder Koaxialsonde ausgestaltet ist. Eine direkte Anbindung des Resonators 11 an das aktive Element 13 ist ebenfalls möglich, sodass die Steckverbindung 12 entfällt.

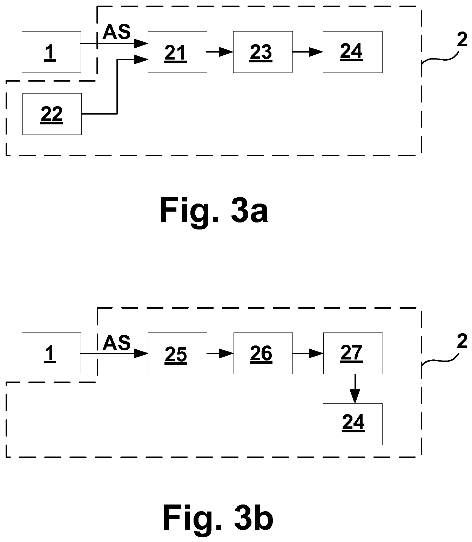

Das Ausgangssignal AS ist einer ebenfalls in dem Feldgehäuse 32 angeordneten Elektronikeinheit 2 zugeführt. Diese wertet das Ausgangssignal AS in Bezug auf die Frequenz aus und bestimmt an Hand der Frequenz die Prozessgröße. Auf die Ausgestaltung der Elektronikeinheit 2 und die Auswertung des Ausgangssignals AS wird im Zusammenhang mit Fig. 3a und Fig. 3b näher eingegangen. Die Prozessgröße ist über eine Schnittstelle abrufbar oder ausgebbar.

Das aktive Element 13 erzeugt die Schwingung im Zusammenspiel mit dem Resonator 11 kontinuierlich oder pulsartig. Ein Pulsbetrieb ist gegenüber dem kontinuierlichen Betrieb energiesparender. Die Pulsdauer ist hierbei derart vorzugeben, dass die Pulsdauer größer ist als das Produkt aus Schwingungsdauer und Güte. Als aktives Element 13 eignet sich beispielsweise eine Gunn-Diode oder ein Transistor. Das aktive Element 13 kann auch in Hohlleiterbauweise ausgeführt sein. Die Frequenz der erzeugten Schwingungen liegt vorzugsweise im Gigahertz-Bereich, beispielsweise zwischen 2,4 und 26 GHz.

Als auskoppelndes Element 14 sind beispielsweise Verstärker, Kondensatoren, Übertrager oder so genannte Leitungselemente für hohe Frequenzen ab ca. 1GHz in Form von Filterstrukturen oder seitengekoppelten Leitungspaaren, einsetzbar. Optional beinhaltet das auskoppelnde Element 14 einen Begrenzerverstärker oder dem auskoppelnden Element 14 ist ein Begrenzerverstärker nachgestellt.

In dem dargestellten Ausführungsbeispiel ist der Resonator 11 als offene Mikrostreifenleitung aufgeführt. An Stelle einer offenen Mikrostreifenleitung ist auch eine mit einem Kurzschluss versehene Mikrostreifenleitung geeignet. Die Mikrostreifenleitung weist einen oder mehrere leitfähige Streifen auf, welche auf einem Dielektrikum aufgebracht sind. Die von dem mindestens einen Streifen abgewandte Seite des Dielektrikums ist mit einer metallischen Beschichtung versehen. Die Mikrostreifenleitung ist derart in dem Sensorgehäuse 31 montiert, dass die metallische Beschichtung dem Inneren des Sensorgehäuses 31 zugewandt ist. Das Sensorgehäuse 31 weist eine Ausnehmung auf, sodass der mindestens eine Streifen zumindest abschnittsweise direkten Kontakt zu dem Inneren des Behälters 5 besitzt und nicht von dem Sensorgehäuse 31 umgeben ist. Vorteilhaft ist eine Ausgestaltung, in welcher die Ausnehmung mit einer Prozesstrennschicht 4 aus einem elektrisch isolierenden Material bedeckt ist. Die Prozesstrennschicht 4 kann auch in Form einer dünnen Schicht direkt auf den leitfähigen Streifen aufgebracht sein. Beispielsweise besteht die Prozesstrennschicht 4 aus PTFE oder einem PTFE-Derivat, beispielsweise ETFE.

In einer anderen Ausgestaltung handelt es sich bei dem Resonator 11 um eine Patchantenne, vorzugsweise mit geringer Güte. Eine Patchantenne weist mindestens einen Resonator auf, welcher in der Regel durch eine oder mehrere Lagen einer auf eine Leiterplatte aufgebrachten metallischen Beschichtung und eine Massefläche auf der gegenüberliegenden Seite der Leiterplatte gebildet ist. Durch die geringe Güte wird nur ein geringer Anteil der Leistung der Patchantenne abgestrahlt und die Frequenzänderung bei einer Änderung des Grenzstands ist höher als bei einer Patchantenne mit hoher Güte. Unter einer geringen Güte ist eine Güte bis ca. 100 zu verstehen. Besonders geeignet für den Einsatz in einer erfindungsgemäßen Vorrichtung ist eine Patchantenne mit sehr geringer Güte unter 20, beispielsweise zwischen 5 und 20. Die Verbindung zwischen Patchantenne und aktivem Element 13 ist über einen Wellenleiter, beispielsweise eine Mikrostreifenleitung oder eine koaxiale Leitung, hergestellt.

Gemäß einer anderen Ausgestaltung ist der Resonator 11 als Hohlleiter ausgebildet. Der Hohlleiter kann beispielsweise runden oder rechteckigen Querschnitts sein und weist eine metallische Wandung auf. Eine weitere Ausgestaltungsform des Resonators 11 ist eine Koaxialsonde mit einem Innenleiter 15 und einem Außenleiter 16, welcher den Innenleiter 15 unter Ausbildung eines Zwischenraumes koaxial umgibt. In einer Variante ist der Zwischenraum der Koaxialsonde oder der Hohlraum des Hohlleiters mit einem Dielektrikum in Form eines Feststoffes, beispielsweise PTFE, gefüllt. Eine Koaxialsonde ist gleichermaßen für hohe und niedrige Frequenzen als Resonator 11 geeignet. Der Endbereich des Hohlleiters bzw. der Koaxialsonde ist vorzugsweise mit einer Prozesstrennschicht 4 verschlossen, sodass eine senkrecht zu der metallischen Wandung des Hohlleiters bzw. der Koaxialsonde ausgerichtete Kontaktfläche zu dem Medium ausgebildet ist. Insbesondere für den Fall eines mit einem Dielektrikum in Form eines Feststoffes ausgefüllten Resonators 11 kann eine Prozesstrennschicht 4 auch entfallen. Wesentlich ist, dass eine nicht-metallische Kontaktfläche zu dem Inneren des Behälters 5 und ggf. dem darin befindlichen Medium besteht, sodass das Medium Einfluss auf die Frequenz der sich in dem Resonator 11 ausbreitenden Schwingung nehmen kann. Der Resonator 11 kann in das Innere des Behälters 5 hineinragen oder derart angeordnet sein, dass die Kontaktfläche bündig mit der Innenwandung des Behälters 5 abschließt.

In einer Variante eines Hohlleiters oder einer Koaxialsonde ist die Wandung bzw. der Außenleiter des Resonators 11 durch ein Schwallrohr gebildet, welches vorzugsweise einen Durchmesser von einigen Millimetern und eine Länge von einem bis einigen Zentimetern, beispielsweise 1-20 cm, insbesondere 1-10 cm, aufweist. Eine Prozesstrennschicht ist nicht vorhanden, sodass das Medium in das Schwallrohr eindringen kann. Insbesondere in kleinen Behältern 5 mit einer Höhe von 10-20 cm ist mittels eines derartig ausgestalteten Resonators 11 bei senkrechtem Einbau der Füllstand kontinuierlich bestimmbar, da sich eine der Steighöhe des Mediums in dem Schwallrohr entsprechende Frequenzänderung ergibt.

Erfindungsgemäß bildet der Resonator 11 den Sensor für das zu detektierende Medium. Die Frequenz des in dem Resonator 11 hin und her laufenden Signals hängt von dem Medium, genauer gesagt von der Dielektrizitätszahl des Mediums ab, welches mit dem Resonator 11 in direktem Kontakt steht. In einer Ausgestaltung mit einer Prozesstrennschicht 4 ist hierbei das mit der Prozesstrennschicht 4 in Kontakt stehende Medium maßgeblich für die Schwingungsfrequenz. Bei einer Änderung des Bedeckungsgrades erfolgt innerhalb einer bestimmten Zeitdauer eine Anpassung der Schwingungen in dem Resonator 11 an die veränderten Randbedingungen. Diese Zeitdauer ist durch das Produkt aus der Güte des Resonators 11 und der Schwingungsperiode der Schwingungen mit der angepassten Frequenz gegeben. Der Resonator 11 ist vorzugsweise derart dimensioniert, dass der Oszillator 1 eine Güte zwischen 1 und 100 besitzt.

Durch die geringe Wellenausbreitung und das schmale Frequenzband des Oszillators 1 besitzt die erfindungsgemäße Vorrichtung eine hohe Störfestigkeit gegenüber Störsignalen.

Mit der erfindungsgemäßen Vorrichtung ist nicht nur die Überwachung eines Grenzfüllstands möglich. Nach entsprechender Justierung ist eine Zuordnung einer Frequenz des

Ausgangssignals AS zu einem bestimmten Medium bzw. zu einer bestimmten Dielektrizitätszahl möglich. Hierdurch kann das Medium bestimmt werden, welches den Resonator 11 berührt, oder es kann eine Grenzschicht zwischen zwei Medien, beispielsweise Wasser-Öl detektiert werden. Für den Einsatz als Grenzstandschalter ist keine Justierung vor Ort erforderlich, sodass die Vorrichtung nach der Montage direkt in Betrieb genommen werden kann. Weiterhin ist in Behältern 5 mit geringen Abmessungen eine kontinuierliche Füllstandsmessung möglich. Hierzu sollten jedoch die Dielektrizitätszahl und/oder die elektrische Leitfähigkeit des zu detektierenden Mediums bekannt sein. Der Füllstand ist aus der Frequenz des Ausgangssignals AS des Oszillators mittels einer Kurvenauswertung bestimmbar.

Vorteilhaft ist darüber hinaus eine Integration des Oszillators 1 in eine kapazitive Messsonde zum frontbündigen Einbau in eine Wandung eines Behälters 5 oder eine Rohrleitung 6. Ein Messgerät mit einer derartigen Messsonde wird von der Anmelderin unter der Bezeichnung Liquipoint M hergestellt und vertrieben. Durch die gegenüber einer kapazitiven Messung geringere Ausbreitung des elektromagnetischen Feldes in das Innere des Behälters 5 oder der Rohrleitung 6 kann mittels des Oszillators 1 auch in Aufbauten geringer Abmessungen gemessen werden, in welchen eine auf dem kapazitiven Prinzip beruhende Messung auf Grund der geringen Distanz zu der gegenüberliegenden Wandung gestört würde. Die Integration des Oszillators 1 in die kapazitive Messsonde führt daher zu einer Erweiterung des Anwendungsbereichs des Messgerätes.

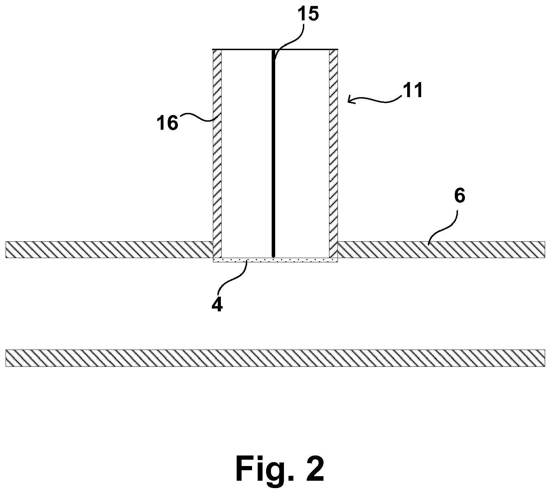

Fig. 2 offenbart in schematischer Darstellung eine erfindungsgemäße Vorrichtung, welche in eine Rohrleitung 6 eingebracht ist. Der Resonator 11 ist hier außerhalb des Prozesses angeordnet. Eine derartige Ausgestaltung eignet sich insbesondere für Rohrleitungen 6 mit geringem Durchmesser oder auch für Behältnisse mit geringen Abmessungen, beispielsweise so genannte Biobags, bei welchen es sich um Einwegbehälter zur Aufnahme von biologischem Material und zum Ablauf chemischer Reaktionen handelt. Der Resonator 11 ist als Koaxialsonde ausgestaltet, welche durch eine Prozesstrennschicht von dem Inneren der Rohrleitung 6 getrennt ist. Die Koaxialsonde weist einen Innenleiter 15 auf, welcher koaxial von einem Außenleiter 16 umgeben ist. Der Zwischenraum ist durch ein Dielektrikum ausgefüllt. Bei dem Dielektrikum handelt es sich beispielsweise um Luft oder um PTFE. In ersterem Fall besteht beispielsweise ein Luftaustausch zwischen dem Zwischenraum und dem Innenraum des Feldgehäuses 32, in welchem sich die Elektronikeinheit 2 befindet. Vorteilhaft ist ein Dielektrikum, dessen Dielektrizitätszahl größer ist als diejenige des zu detektierenden Mediums in der Rohrleitung 6. Im Falle einer metallischen Rohrleitung 6 kann der Außenleiter elektrisch mit der Rohrleitung verbunden sein.

Die Prozesstrennschicht 4 schließt im Wesentlichen bündig mit der Rohrleitung 6 ab. Das Material der Prozesstrennschicht 4 ist aus den elektrisch isolierenden Materialien vorzugsweise derart gewählt, dass dessen Dielektrizitätszahl maximal der Dielektrizitätszahl des Dielektrikums entspricht, welches sich zwischen Innenleiter 15 und Außenleiter 16 befindet. Vorzugsweise handelt es sich weiterhin um ein stabiles Material, welches nicht durch eine gegebenenfalls in der Rohrleitung 6 vorherrschende Strömung abgetragen wird. Ein geeignetes Material ist beispielsweise ein PTFE-Derivat, insbesondere ETFE.

Vorteilhaft bei dieser Ausgestaltung ist unter anderem, dass der Abstand von Innenleiter 15 und Außenleiter 16 sehr gering sein kann, womit eine Koaxialsonde geringen Durchmessers geschaffen ist, welche sich für den Einbau in Rohrleitungen 6 mit geringer Nennweite eignet. Weiterhin verfügt die Koaxialsonde über einen flachen Endbereich, welcher kaum in das Innere der Rohrleitung 6 hineinragt und somit einen allenfalls geringen mechanischen Widerstand für das Medium darstellt.

An Stelle der Koaxialsonde ist auch ein Hohlleiter, eine Mikrostreifenleitung, oder eine Patchantenne mit geringer Güte als Resonator 11 für den Einsatz in einer Rohrleitung 6 mit geringer Nennweite geeignet.

Fig. 3a und Fig. 3b zeigen ein Blockschaltbild zweier Ausführungsbeispiele einer Elektronikeinheit 2 einer erfindungsgemäßen Vorrichtung. Der Elektronikeinheit 2 ist jeweils das Ausgangssignal AS des Oszillators 1 zugeführt.

In Fig. 3a ist eine Auswertung mittels Frequenzumsetzung dargestellt. Hierzu ist das Ausgangssignal AS einem ersten Eingang eines Hochfrequenzmischers 21 zugeführt. An einem zweiten Eingang des Hochfrequenzmischers 21 liegt ein Referenzsignal mit einer konstanten Frequenz an. Die Funktion des Hochfrequenzmischers 21 besteht darin, die Frequenz des Ausgangssignals AS des Oszillators 1 durch Differenzbildung mit dem Referenzsignal zu einer niedrigeren Frequenz hin zu verschieben. Signale mit niedrigen Frequenzen sind einfacher und kostengünstiger weiterverarbeitbar als hochfrequente. Die niedrigere Frequenz kann auch nahezu Null sein, sodass eine Änderung der Schwingungen im Resonator 11 durch Auftreten einer von Null verschiedenen Frequenz am Ausgang des Hochfrequenzmischers 21 erkennbar ist. Der Hochfrequenzmischer 21 weist beispielsweise eine oder mehrere Dioden oder ein Gunn-Element auf, oder er besteht aus Transistoren, insbesondere einer Gilbertzelle.

Die Frequenz des Ausgangssignals AS nimmt Werte in einem durch eine untere und eine obere Grenzfrequenz begrenzten Frequenzbereich an. Der Referenzoszillator 22 ist vorzugsweise derart ausgestaltet, dass die Frequenz des Referenzsignals zumindest im Wesentlichen der oberen Grenzfrequenz oder der unteren Grenzfrequenz entspricht. Das Signal am Ausgang des Hochfrequenzmischers 21 nimmt dann Werte an, welche zwischen 0 Hz und einem oberen Wert, welcher der Breite des Frequenzbereichs entspricht, liegen.

Die Erzeugung des Referenzsignals übernimmt ein Referenzoszillator 22. Beispielsweise ist der Referenzoszillator 22 ein spannungsgesteuerter Oszillator, auch unter der Abkürzung VCO bekannt. Die Frequenz eines VCOs ist elektronisch abstimmbar. Alternativ ist der Referenzoszillator 22 analog zu dem Oszillator 1 aufgebaut, welcher der Messung und der Erzeugung des Ausgangssignals AS dient. Ein derartiger Referenzoszillator 22 umfasst ein aktives Element zur Erzeugung einer Schwingung, ein frequenzbestimmendes Element, ein auskoppelndes Element und vorzugsweise einen Begrenzerverstärker. Das frequenzbestimmende Element kann als mechanisch abstimmbarer Resonator, beispielsweise in Form einer Mikrostreifenleitung, oder als elektronisch abstimmbares Bauteil, beispielsweise als Varaktordiode, ausgestaltet sein. In einer Ausgestaltung kommt als aktives Element ein Feldeffekttransistor zum Einsatz. Über das frequenzbestimmende Element, welches in die Beschaltung des Feldeffekttransistors, eingebracht ist, sind die Schwingungseigenschaften, insbesondere die Schwingfrequenz, einstellbar.

Wird die Vorrichtung in einer Umgebung eingesetzt, in welcher extreme Temperaturen oder große Temperatursprünge auftreten, kann die Frequenz der Schwingungen in dem Resonator 11 eine Temperaturabhängigkeit aufweisen. Diese kann kompensiert werden, indem der Resonator des Referenzoszillators 22 und der Resonator 11 des Oszillators 1 im Wesentlichen gleich, beispielsweise als Koaxialsonde, ausgestaltet sind und benachbart angeordnet und somit der gleichen Temperatur ausgesetzt werden. Weiterhin sind die aktiven Elemente zur Schwingungserzeugung gleich auszugestalten. Der Resonator des Referenzoszillators 22 steht mit dem Medium nicht oder über eine metallische Grenzfläche in Kontakt, sodass die Frequenz des mittels des Referenzoszillators 22 erzeugten Referenzsignals von dem Medium unbeeinflusst ist. Alternativ ist eine elektronische Temperaturkompensation möglich. Hierzu misst ein Temperaturfühler die am Ort des Resonators 11 vorherrschende Temperatur und mittels einer hinterlegten Temperaturabhängigkeit der Frequenz des Ausgangssignals AS nimmt eine Auswerteeinheit, beispielsweise der Mikrocontroller 24, eine entsprechende Korrektur der Frequenz vor.

Das niederfrequente Ausgangssignal des Hochfrequenzmischers 21 ist einem Frequenzzähler 23 zugeführt, wobei dem Mischer 21 noch ein Filter nachgestellt sein kann. Der Frequenzzähler 23 bestimmt die Frequenz des verarbeiteten Signals, woraus durch die bekannte Umsetzung durch den Hochfrequenzmischer 21 die Frequenz des Ausgangssignals AS des Oszillators 1 bestimmbar ist. Das Signal des Frequenzzählers 23 ist einer digitalen Verarbeitungseinheit in Form eines Mikrocontrollers 24 zugeführt. Zur Grenzstandüberwachung vergleicht der Mikrocontroller 24 die ermittelte Frequenz des Ausgangssignals AS mit einem hinterlegten Grenzwert, dessen Über- oder Unterschreiten mit dem Erreichen des zu überwachenden Grenzstandes einhergeht. Der Mikrocontroller 24 erzeugt ein entsprechendes Schaltsignal, welches anzeigt, ob der Grenzstand erreicht ist. In einer anderen Variante ist die Erzeugung des Schaltsignals mit analogen Bauelementen ausgeführt. Alternativ zu der Frequenzbestimmung mittels des Frequenzzählers 23 ist die Frequenz auch von dem Mikrocontroller 24 bestimmbar. Hierzu ist das Ausgangssignal des Hochfrequenzmischers 21 einem Analog-Digital-Wandler und das digitalisierte Signal dem Mikrocontroller 24 zugeführt.

In Fig. 3b ist das Ausgangssignal AS über einen Begrenzerverstärker 25 einem Hochfrequenzfilter 26 zugeführt. Der Begrenzerverstärker 25 verstärkt das Hochfrequenzsignal bis an einen internen Sättigungspunkt der Ausgangsamplitude und dient der Kompensation eines leichten Frequenzgangs des Oszillators 1. Der Begrenzerverstärker 25 ist optionaler Bestandteil dieser Ausgestaltung. Das Hochfrequenzfilter 26 ist derart dimensioniert, dass die Amplitude des gefilterten Signals frequenzabhängig ist und hierbei zumindest innerhalb eines vorgegebenen Frequenzbandes einer stetigen Funktion folgt. Das vorgegebene Frequenzband enthält zumindest all diejenigen Frequenzen, welche das Ausgangssignal AS aufweisen kann. Hierdurch ist jeder Frequenz des Ausgangssignals AS des Oszillators 1 eindeutig eine Amplitude zugeordnet. Beispielsweise ist das Hochfrequenzfilter 26 als Hochpass oder als Tiefpass ausgestaltet.

Das gefilterte Ausgangssignal ist einem Detektor 27 zugeführt, welcher die Amplitude des gefilterten Ausgangssignals bestimmt. Bei dem Detektor 27 handelt es sich beispielsweise um eine Hochfrequenzdiode oder um einen thermischen Hochfrequenzdetektor.

Die Zuordnung der Spannungsamplitude zu einer Frequenz des Ausgangssignals AS des Oszillators 1 ist beispielsweise in einem Mikrocontroller gespeichert. Hierzu ist das am Ausgang des Detektors 27 anliegende Signal nach Analog-Digital-Wandlung dem Mikrocontroller 24 zur Auswertung zugeführt. Die Erzeugung des Schaltsignals erfolgt wie im Zusammenhang mit Fig. 3a beschrieben.

In einer hier nicht dargestellten weiteren Ausgestaltung der Elektronikeinheit 2 ist das Ausgangssignal AS des Oszillators 1 direkt einem Frequenzzähler zugeführt. Bei dem Frequenzzähler handelt es sich um eine in Analogtechnik ausgestaltete Schaltungsanordnung zur Bestimmung der Frequenz eines Signals. Diese Ausgestaltung ist insbesondere für relativ geringe Frequenzen unterhalb 2,4 GHz geeignet.

### Bezugszeichenliste

- 1: Oszillator
- 11: Resonator
- 12: Steckverbindung
- 13: Aktives Element
- 14: Auskoppelelement
- 15: Innenleiter
- 16: Außenleiter
- 2: Elektronikeinheit
- 21: Hochfrequenzmischer
- 22: Referenzoszillator
- 23: Frequenzzähler
- 24: Mikrocontroller
- 25: Begrenzerverstärker
- 26: Hochfrequenzfilter
- 27: Detektor
- 31: Sensorgehäuse
- 32: Feldgehäuse
- 4: Prozesstrennschicht
- 5: Behälter
- 6: Rohrleitung

## Patentansprüche

1. Vorrichtung zur Bestimmung und/oder Überwachung eines Füllstands eines Mediums in einem Behälter (5) oder einer Rohrleitung (6), mit einem Resonator (11), welcher mit einem Inneren des Behälters (5) oder der Rohrleitung (6) in Kontakt steht, mit einem aktiven Element (13) zum Erzeugen eines hochfrequenten Signals in dem Resonator (11) und mit einer Elektronikeinheit (2), welche dazu ausgestaltet ist, von der aus Resonator (11) und aktivem Element (13) gebildeten Einheit ein elektrisches Ausgangssignal (AS) zu empfangen und das Ausgangssignal (AS) in Bezug auf die Frequenz auszuwerten,
**dadurch gekennzeichnet,**
**dass** die Elektronikeinheit (2) dazu ausgestaltet ist, die Frequenz des Ausgangssignals (AS) zu bestimmen und einer Dielektrizitätszahl des Mediums zuzuordnen.

2. Vorrichtung nach Anspruch 1,
**dadurch gekennzeichnet,**
**dass** der Resonator (11) als Hohlleiter oder als Koaxialsonde mit einem Innenleiter (15) und einem den Innenleiter (15) koaxial umgebenden Außenleiter (16) ausgestaltet ist.

3. Vorrichtung nach Anspruch 1,
**dadurch gekennzeichnet,**
**dass** der Resonator (11) als Mikrostreifenleitung oder als Patchantenne ausgestaltet ist.

4. Vorrichtung nach einem der vorangehenden Ansprüche,
**dadurch gekennzeichnet,**
**dass** der Resonator (11) zumindest abschnittsweise über eine elektrisch isolierende Prozesstrennschicht (4) mit dem Inneren des Behälters (5) oder der Rohrleitung (6) in Kontakt steht.

5. Vorrichtung nach mindestens einem der vorangehenden Ansprüche,
**dadurch gekennzeichnet,**
**dass** die Elektronikeinheit (2) einen Mischer (21) zur Umsetzung des Ausgangssignals (AS) in ein niederfrequentes Signal aufweist.

6. Vorrichtung nach dem vorangehenden Anspruch,
**dadurch gekennzeichnet,**
**dass** benachbart zu dem Resonator (11) ein zweiter Resonator ohne Mediumskontakt zur Erzeugung eines Referenzsignals angeordnet ist, und dass der Mischer (21) aus dem Ausgangssignal (AS) und dem Referenzsignal ein temperaturkompensiertes Signal erzeugt.

7. Vorrichtung nach einem der Ansprüche 1-4,
**dadurch gekennzeichnet,**
**dass** die Elektronikeinheit (2) ein Filter (26) aufweist, welchem das Ausgangssignal (AS) zugeführt ist, und welches derart dimensioniert ist, dass die Amplitude des Ausgangssignals des Filters (26) eine stetige Abhängigkeit von der Frequenz des Ausgangssignals (AS) des Oszillators (1) aufweist.

8. Vorrichtung nach mindestens einem der vorangehenden Ansprüche,
**dadurch gekennzeichnet,**
**dass** die Elektronikeinheit (2) dazu ausgestaltet ist, eine Änderung der Frequenz des Ausgangssignals (AS) zu detektieren und an Hand der Änderung eine Änderung eines Grenzstands des Mediums zu detektieren.

9. Vorrichtung nach mindestens einem der vorangehenden Ansprüche,
**dadurch gekennzeichnet,**
**dass** in der Elektronikeinheit (2) mindestens ein Grenzwert für die Frequenz des Ausgangssignals (AS) hinterlegt ist, und dass die Elektronikeinheit (2) dazu ausgestaltet ist, die Frequenz des Ausgangssignals (AS) mit dem Grenzwert zu vergleichen und ein Alarmsignal zu erzeugen, wenn die Frequenz den Grenzwert erreicht.

## Claims

1. Apparatus designed to determine and/or monitor a level of a medium in a vessel (5) or a pipe (6), with a resonator (11), which is contact with an interior area of the vessel (5) or pipe (6), with an active element (13) for the generation of a highfrequency signal in the resonator (11) and with an electronic unit (2), which is designed to receive an electrical output signal (AS) from the unit formed by the resonator (11) and the active element (13), and to evaluate the output signal (AS) with regard to the frequency,
**characterized in that**
the electronic unit (2) is designed to determine the frequency of the output signal (AS) and assign it to a dielectric coefficient of the medium.

2. Apparatus as claimed in Claim 1,
**characterized in that**
the resonator (11) is designed as a waveguide or as a coaxial probe with an internal conductor (15) and outer conductor (16) surrounding the internal conductor in a coaxial manner (15).

3. Apparatus as claimed in Claim 1,
**characterized in that**
the resonator (11) is designed as a microstrip line or as a patch antenna.

4. Apparatus as claimed in one of the previous claims,
**characterized in that**
the resonator (11) is at least partially in contact with the interior of the vessel (5) or the pipe (6) by means of an electrically isolating process separation layer (4).

5. Apparatus as claimed in at least one of the previous claims,
**characterized in that**
the electronic unit (2) features a mixer (21) designed to convert the output signal (AS) into a low-frequency signal.

6. Apparatus as claimed in the previous Claim,
**characterized in that**
a second resonator is arranged in a manner adjacent to the resonator (11), said second resonator not being in contact with the medium and designed to generate a reference signal, and **in that** the mixer (21) generates a temperature-compensated signal from the output signal (AS) and the reference signal.

7. Apparatus as claimed in one of the Claims 1 to 4,
**characterized in that**
the electronic unit (2) has a filter (26), to which the output signal (AS) is supplied, and which is sized in such a way that the amplitude of the output signal of the filter (26) presents a constant dependency on the frequency of the output signal (AS) of the oscillator (1).

8. Apparatus as claimed in at least one of the previous claims,
**characterized in that**
the electronic unit (2) is designed to detect a change in the frequency of the output signal (AS) and, on the basis of said change, to detect a change in the limit level of the medium.

9. Apparatus as claimed in at least one of the previous claims,
**characterized in that**
at least one limit value for the frequency of the output signal (AS) is saved in the electronic unit (2), and **in that** the electronic unit (2) is designed to compare the frequency of the output signal (AS) with the limit value and to generate an alarm signal when the frequency reaches the limit value.

## Revendications

1. Dispositif destiné à la détermination et/ou la surveillance d'un niveau d'un produit dans un réservoir (5) ou une conduite (6), avec un résonateur (11), lequel est en contact avec un intérieur du réservoir (5) ou de la conduite (6), avec un élément actif (13) destiné à la génération d'un signal haute fréquence dans le résonateur (11) et avec une unité électronique (2), laquelle est conçue de telle sorte à recevoir de l'unité formée du résonateur (11) et de l'élément actif (13), un signal de sortie (AS) électrique, et à évaluer le signal de sortie (AS) par rapport à la fréquence,
**caractérisé**
**en ce que** l'unité électronique (2) est conçue de telle sorte à déterminer la fréquence du signal de sortie (AS) et à l'attribuer à un coefficient diélectrique du produit.

2. Dispositif selon la revendication 1,
**caractérisé**
**en ce que** le résonateur (11) est conçu en tant que guide d'ondes ou en tant que sonde coaxiale avec un conducteur intérieur (15) et un conducteur extérieur (16) entourant de façon coaxiale le conducteur intérieur (15).

3. Dispositif selon la revendication 1,
**caractérisé**
**en ce que** le résonateur (11) est conçu en tant que guide d'ondes à ruban ou en tant qu'antenne patch.

4. Dispositif selon l'une des revendications précédentes,
**caractérisé**
**en ce que** le résonateur (11) est au moins partiellement en contact avec l'intérieur du réservoir (5) ou la conduite (6) par l'intermédiaire d'une couche séparatrice de process (4) électriquement isolante.

5. Dispositif selon au moins l'une des revendications précédentes,
**caractérisé**
**en ce que** l'unité électronique (2) comporte un mélangeur (21) destiné à convertir le signal de sortie (AS) en un signal basse fréquence.

6. Dispositif selon la revendication précédente,
**caractérisé**
**en ce qu'**est disposé, de manière contiguë au résonateur (11) un deuxième résonateur, sans contact avec le produit, destiné à la génération d'un signal de référence, et **en ce que** le mélangeur (21) génère, à partir du signal de sortie (AS) et du signal de référence, un signal compensé en température.

7. Dispositif selon l'une des revendications 1 à 4,
**caractérisé**
**en ce que** l'unité électronique (2) comporte un filtre (26), auquel est acheminé le signal de sortie (AS), et lequel est dimensionné de telle sorte que l'amplitude du signal de sortie du filtre (26) présente une dépendance constante de la fréquence du signal de sortie (AS) de l'oscillateur (1).

8. Dispositif selon au moins l'une des revendications précédentes,
**caractérisé**
**en ce que** l'unité électronique (2) est conçue de telle sorte à détecter un changement de fréquence du signal de sortie (AS) et, sur la base de ce changement, à détecter un changement d'un seuil de niveau du produit.

9. Dispositif selon au moins l'une des revendications précédentes,
**caractérisé**
**en ce qu'**est enregistrée dans l'unité électronique (2) au moins une valeur limite pour la fréquence du signal de sortie (AS), et **en ce que** l'unité électronique (2) est conçue de telle sorte à comparer la fréquence du signal de sortie (AS) avec la valeur limite et à générer un signal d'alarme lorsque la fréquence atteint la valeur limite.
